# EUROPEAN PATENT APPLICATION

(11) **EP 2 894 602 A1**
(43) Date of publication of application: **15.07.2015**
(21) Application number: 15150393.5
(22) Date of filing: 07.01.2015
(51) Int. Cl.: G06T 7/00

(54) **A method of using image warping for geo-registration feature matching in vision-aided positioning**

(30) Priority: 13.01.2014 US 201414153495
(71) Applicant: Honeywell International Inc., Morristown, NJ 07962-2245 (US)
(72) Inventor: Qian, Gang, Morristown, NJ 07962-2245 (US); Jeerage, Mahesh K., Morristown, NJ 07962-2245 (US); Ma, Yunqian, Morristown, NJ 07962-2245 (US)
(74) Representative: Houghton, Mark Phillip

(57) **Abstract**

Systems and methods for using image warping to improve geo-registration feature matching in vision-aided positioning is provided. In at least one embodiment, the method comprises capturing an oblique optical image of an area of interest using an image capturing device. Furthermore, digital elevation data and at least one geo-referenced orthoimage of an area that includes the area of interest are provided. The area of interest in the oblique optical image is then correlated with the digital elevation data to create an image warping matrix. The at least one geo-referenced orthoimage is then warped to the perspective of the oblique optical image using the image warping matrix. And, features in the oblique optical image are matched with features in the at least one warped geo-referenced orthoimage.

## Description

### BACKGROUND

When global navigation satellite systems (GNSS) are unavailable, technologies that incorporate vision-based positioning can be useful. One type of vision-based positioning technology is where a 2D-airborne image captured from an aircraft's current location is correlated with a previously generated 2D-geo-referenced image that has latitude and longitude coordinates. The two images can be correlated by matching recognizable features within each image. This is known as geo-registration feature matching. Once features within the two images are matched, the latitude and longitude of features in the airborne image can be determined. Moreover, a digital elevation model dataset can be used to provide the elevation information of the feature matched images, so that a 3D-positioning map can be determined. After geo-registration feature matching, the position and attitude of the aircraft can be computed by determining the aircraft's position within the 3D-positioning map at the time the 2D-airborne image was created.

### SUMMARY

Systems and methods for using image warping to improve geo-registration feature matching in vision-aided positioning is provided. In at least one embodiment, the method comprises capturing an oblique optical image of an area of interest using an image capturing device. Furthermore, digital elevation data and at least one geo-referenced orthoimage of an area that includes the area of interest are provided. The area of interest in the oblique optical image is then correlated with the digital elevation data to create an image warping matrix. The at least one geo-referenced orthoimage is then warped to the perspective of the oblique optical image using the image warping matrix. And, features in the oblique optical image are matched with features in the at least one warped geo-referenced orthoimage.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a flow diagram of an example method of using image warping for geo-registration feature matching.
Figure 2A is a diagram of an example vehicle in which the method of Figure 1 can be implemented.
Figure 2B is a diagram of a top-down close-up view of the vehicle of Figure 2A showing the angle of an image capturing device on the vehicle.
Figure 3A is an example of an oblique optical image for use in the method of Figure 1.
Figure 3B is an example of digital elevation data for use in the method of Figure 1.
Figure 3C is an example of a geo-referenced orthoimage for use in the method of Figure 1.
Figure 4A is an example of an oblique optical image for use in the method of Figure 1.
Figure 4B is an example of a geo-referenced orthoimage for use in the method of Figure 1.
Figure 4C is an example of a geo-referenced orthoimage after warping to the perspective of the oblique optical image.
Figure 5A is an example of an image that has features in an oblique optical image matched to features in a geo-referenced orthoimage using a conventional method.
Figure 5B is an example of an image that has features in an oblique optical image matched to features in a geo-referenced orthoimage using the method of Figure 1.
Figure 5C is an example of a table comparing navigation solutions using a conventional method of feature matching and using the method of Figure 1 for feature matching.
Figure 6 is a block diagram of an example system that uses image warping for geo-registration feature matching.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The key to the vision-based positioning technology described above is to find reliable feature matches between the 2D-airborne image and the previously generated 2D-geo-referenced image. A major technical challenge in finding reliable matches is due to the fact that the airborne image and the geo-referenced images are often captured at different perspectives. For example, the airborne image is often an oblique view and the geo-referenced image often has a top-down view. Directly applying existing feature matching algorithms to such an airborne image and geo-reference image can yield many errors, by either not matching identifiable features or matching features incorrectly. These errors detrimentally affect the performance of vision-based positioning. This disclosure addresses these feature matching challenges by warping 2D-geo-referenced orthoimages to the perspective of the 2D-airborne image. Due to changing the perspective of the 2D-geo-referenced orthoimage, better feature matching is possible, as shown below; and therefore, vision-aided positioning is practical for aircraft navigation in GNSS-denied environments. In addition, the technology disclosed in this invention can be used to provide reliable positioning aiding to inertial navigation systems (INS) to correct the position drift problem of the INS. In some embodiments, the invention disclosure can be used in an integrated aircraft navigation system that uses an inertial measurement unit (IMU), a GNSS receiver, and an electro-optical (EO) sensor.

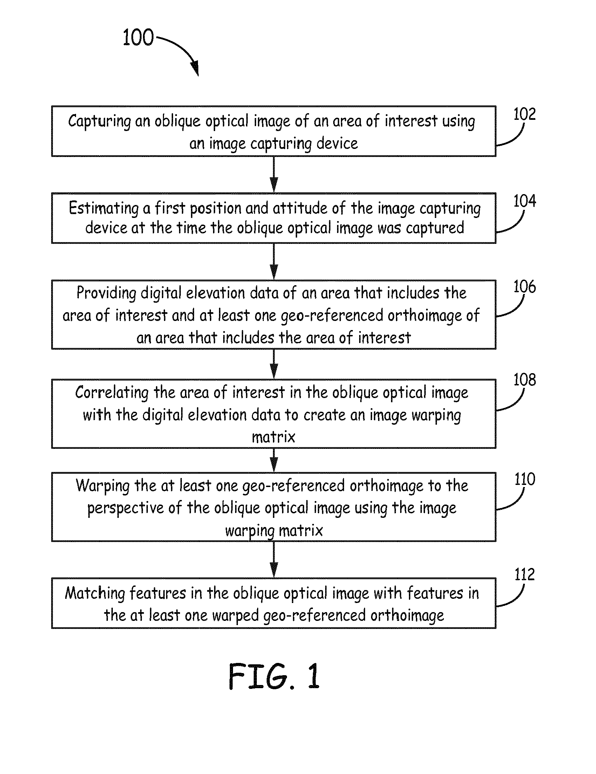

Figure 1 is flow diagram of a method 100 of using image warping for geo-registration feature matching. The method comprises capturing an oblique optical image of an area of interest using an image capturing device (block 102); estimating a first position and attitude of the image capturing device at the time the oblique optical image was captured (block 104); providing digital elevation data of an area that includes the area of interest and at least one geo-referenced orthoimage of an area that includes the area of interest (block 106); correlating the area of interest in the oblique optical image with the digital elevation data to create an image warping matrix (block 108); warping the at least one geo-referenced orthoimage to the perspective of the oblique optical image using the image warping matrix (block 110); and matching features in the oblique optical image with features in the at least one warped geo-referenced orthoimage (block 112).

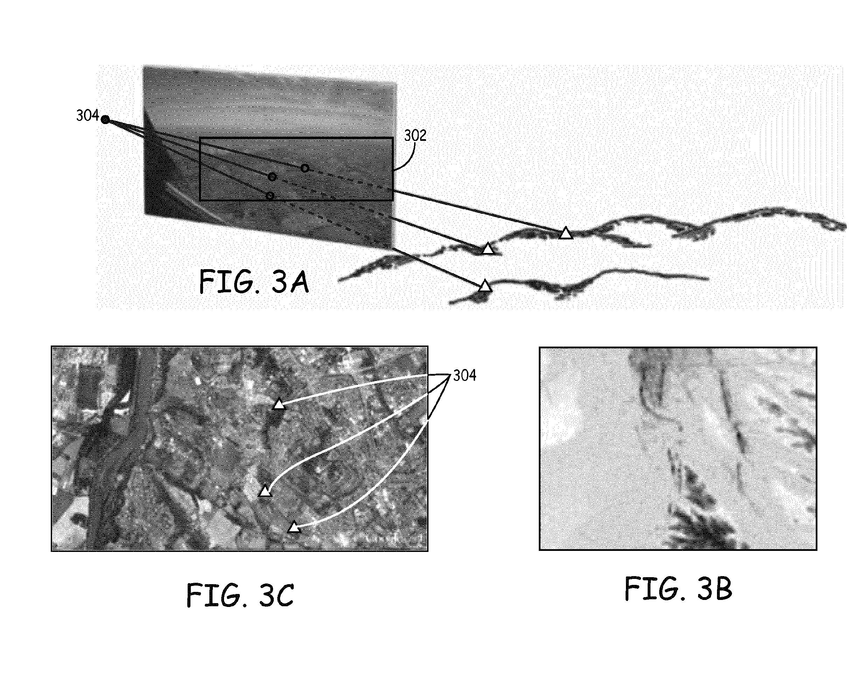

As mentioned above, block 102 entails capturing an oblique optical image of an area of interest using an image capturing device. As an optical image, the oblique optical image is a 2-dimensional (2D) image that captures a representation of color in the field of view of the image capturing device. The representation of color can include a black and white representation, grayscale representation, or another color palette representation including any number of colors. An example oblique optical image is shown in Figure 3A with examples of identifiable features 304.

The area of interest is the portion of the oblique optical image that will be used to correlate recognizable features located within the oblique optical image to recognizable features located within the geo-referenced orthoimagery. (The term "recognizable features" will also be referred to herein as "identifiable features" or "detectable features"). The area of interest can be identified based on features that can be detected within that area. For example, an area of interest can be selected as a city or a portion thereon that includes detectable features such as buildings. In another example, a particular portion of a landscape that includes detectable features can be selected. In yet another example, an area of interest can be identified based on a horizon detected in the oblique optical image. In particular, since objects substantially above the horizon are typically not stationary relative to the earth (such as clouds and flying objects), such objects are not valuable for determining position. Accordingly, in such an example, the area of interest in the oblique optical image is selected to be all or a portion of the area around and below the horizon in the oblique optical image. The area of interest can include the entire oblique optical image or it can include only a portion of the oblique optical image, such as the area of interest 302 in Figure 3A. The area of interest can be determined after the oblique optical image is taken, and in some cases, as stated above, will eliminate portions of the sky or other areas within the oblique optical image that should not be used for the other steps in method 100. For example, in Figure 3A, the sky and portions of the aircraft that were captured in the oblique optical image will not be correlated to the geo-referenced orthoimage (see block 112), so they are not included in the area of interest 302.

An area of interest that is only a portion of the oblique optical image may want to be used instead of an area of interest that is the entire oblique optical image for a variety of reasons. One reason is to reduce the number of recognizable features. That is, if the entire oblique optical image has too many recognizable features, an area of interest that is only a portion of the oblique optical image may be useful to reduce the number of recognizable features that are to be correlated. In another example, an area of interest that is a subset of the oblique optical image may want to be used because the area of interest is the only portion of the oblique optical image that has stationary recognizable features within it, as is the case when clouds and other flying objects are within the oblique optical image. In even another example, an area of interest that is a subset of the oblique optical image may want to be used because, perhaps, the recognizable features in the oblique optical image that are located outside the area of interest have already been correlated using a prior oblique optical image and geo-referenced orthoimagery. Therefore, in these situations and others, it may be useful to use an area of interest that is less than the entire oblique optical image.

The image capturing device that captures the oblique optical image can include a digital camera, film camera, digital sensor, charge-coupled device or other image-capturing device that is capable of capturing images photographically or electronically. In some embodiments, the image capturing device can include one of these devices, and in other embodiments, the image capturing device can include multiple devices that capture the area of interest. Moreover, the characteristics of the image capturing device are known a priori. These characteristics include, but are not limited to, the following: focal length, principal point offset, radial distortion, image sensor size and pixel pitch.

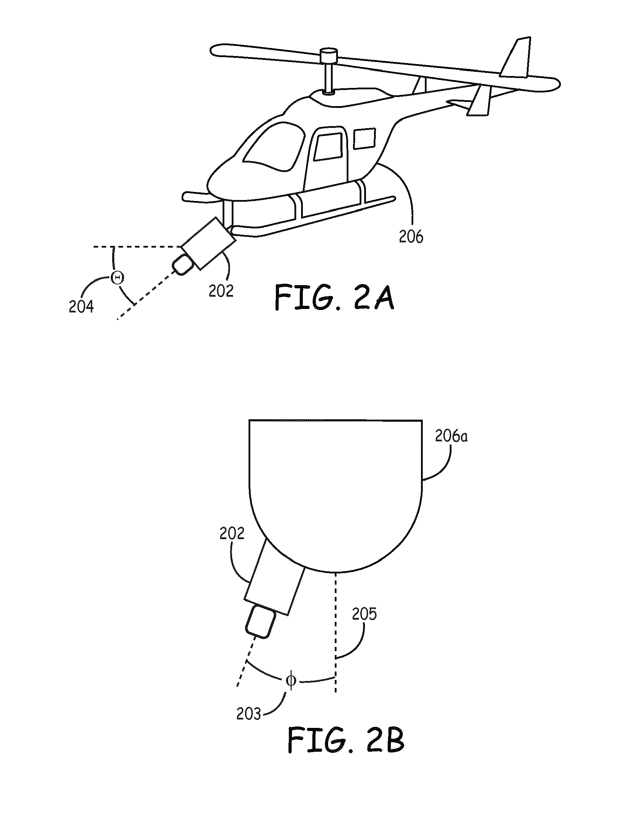

In addition, if the image capturing device is attached to a vehicle, such as an aircraft, the angles of image capturing device relative to the aircraft is known, as shown in Figure 2A. As shown in Figure 2A, the image capturing device 202 is attached to an aircraft 206 and the angle of the image capturing device 202 relative to the horizontal axis of the aircraft is Θ 204. The angle Θ 204 can be any oblique angle greater than 0 degrees and less than 90 degrees. The angle Θ 204 can be fixed or it can change between capturing different oblique optical images, but in both cases, the angle Θ 204 at the time the image is captured is known. If the image capturing device 202 is attached to an aircraft or other vehicle, the angle Φ 203 of the image capturing device 202 relative to the normal of the front of aircraft 205 is also known, as shown in Figure 2B. In Figure 2B, a top-down view of the front portion of an aircraft 206a is shown with the image capturing device 202 attached to the aircraft 206a. The angle Φ 203 of the image capturing device 202 relative to the normal of the front of the aircraft 205 can be any angle greater than 0 degrees and less than 360 degrees. Similarly, the angle Φ 203 can be fixed or can change between capturing different oblique images, but in both cases, the angle Φ at the time the image is captured is known.

The method 100 also includes estimating a first position and attitude of the image capturing device at the time the oblique optical image was captured (block 104). In an embodiment, the first position and attitude of the image capturing device 202, which is also referred to herein as initial position and attitude or input position and attitude of the image capturing device 202, can be estimated based on a position and attitude of the aircraft 206 at the time the oblique optical image is captured. This initial position and attitude of the aircraft can be determined by a navigation system for the aircraft 206. As known, such a navigation system can receive inputs from one or more of a global navigation satellite system (GNSS) receiver, an inertial measurement unit (IMU), a gyroscope, an altimeter, or a compass. As explained in more detail below, the method 100 can be used by the navigation system in conjunction with the inputs from these other devices in order to continually update the position and attitude of the aircraft 206. As such, the initial position and attitude of the aircraft 206 can be the output from the previous iteration of the navigation system using one or more of the inputs listed above.

In another embodiment, the first position and attitude of the image capturing device 202 can be estimated based on one or more recognizable features within the oblique optical image. For example, if one or more recognizable features with known coordinates are within the field of view of the image capturing device, a first position and attitude can be estimated using the recognizable features and the image capturing devices position relative to those recognizable features. A recognizable feature is any feature on the oblique optical image that is capable of being delineated. In some embodiments, recognizable features can include manmade features, such as a building, a park, a home, a roadway intersection and the like. Recognizable features can also include natural features, such as a hill, a lake, a forest, a river and the like. In some embodiments, to improve the estimated position and attitude, LADAR, RADAR, stereo imagery, and the like can be used to determine the distance from the image capturing device to the recognizable feature.

In examples where the image capturing device 202 is moveable relative to the aircraft 206, estimating the first position and attitude of the image capturing device 202 also includes determining the angle and/or position of the image capturing device 202 relative to the aircraft 206 at the time the oblique optical image was captured. In any case, the position and attitude of the image capturing device 202 can be estimated using known techniques based on the position and attitude of the aircraft 206 and the angle and position of the image capturing device 202 relative to the aircraft 206 at the time the oblique optical image was captured.

Once the first position and attitude for the image capturing device is estimated, the first position and attitude can be used to obtain geo-referenced orthoimagery and digital elevation data corresponding to the area of interest within the oblique optical image (block 106). In addition, the area of interest can also be identified based on features that can be detected within that area. For example, if an area of interest is selected as a city or a portion thereon that includes detectable features such as buildings with known locations, then the geo-referenced orthoimagery and digital elevation data can be selected according to the location of the detectable features. Similarly, if a portion of a landscape with a known location is included in the area of interest, then the geo-referenced orthoimagery and digital elevation data can be selected according to the location of the detectable features. Once the location of the area of interest is estimated, then the digital elevation data and the geo-referenced orthoimagery are chosen so that they will include the area of interest.

As explained below, recognizable features in the area of interest of the oblique optical image is matched with the geo-referenced orthoimagery and digital elevation data that was provided above. Accordingly, digital elevation data that includes data corresponding to the area of interest and one or more geo-referenced orthoimages that include the area of interest are available. Figure 3B is an example of digital elevation data and Figure 3C is an example of a geo-referenced orthoimage of the same area of interest that is shown in Figure 3A, as can be seen in Figure 3C because Figure 3C has the same identifiable features 304 as Figure 3A has. The digital elevation data and the geo-referenced orthoimagery can be stored on a computer readable medium onboard the aircraft 206.

Digital elevation data is an array of elevation information for a number of ground positions at regularly spaced intervals. The regularly spaced intervals can vary and usually depends on the size of the digital elevation data array. In some embodiments, this includes intervals of 7.5 minutes, 15-minute, 2-arc-second, or 1-degree units.

A geo-referenced orthoimage is an aerial image of a region that is geometrically corrected so that the scale is uniform. The geo-referenced orthoimage has coordinates associated with the different points within the geo-referenced orthoimage. Some of these points will correspond to identifiable features on the geo-referenced orthoimage. For example, an airplane that flies high above the earth, or a satellite, can capture an image containing hundreds, if not thousands, of features. Coordinates can then be mapped to those features. In situations where there is an abundance of features, it is useful to limit the size of the geo-referenced orthoimage. To limit the number of possible features considered within a geo-referenced orthoimage, the orthoimage can be divided into separate segments, where each segment describes a contiguous region in the image or map that corresponds to a particular region in an environment. After which, navigational information and the coordinates associated with the identifiable features can be used to select an appropriate segment that includes the area of interest captured in the optical image under block 102. More specifically, the estimated position, attitude and angles Φ 203 and Θ 204 of the image capturing device can be used to obtain the geo-location of the optical image. This geo-location can be used so that the digital elevation data and the geo-referenced orthoimagery corresponding to the captured optical image can be provided. The digital elevation data and geo-referenced orthoimagery, however, do not have to correspond exactly with the area of interest in the oblique optical image, as long as the digital elevation data and geo-referenced orthoimagery contain the area of interest. As stated above, the digital elevation data and the geo-referenced orthoimagery can be selected based on the estimated location of the area of interest. Once the location of the area of interest is estimated, then the digital elevation data and the geo-referenced orthoimagery are chosen so that they will include the area of interest.

With respect to block 108, the area of interest in the oblique optical image and the digital elevation data are correlated to create an image warping matrix. The image warping matrix will be used to warp the geo-referenced orthoimage to the perspective of the oblique optical image (see block 110). In an example, to create an image warping matrix, the area of interest is approximated as a 2D plane. An equation for the 2D plane can be found using the digital elevation data that corresponds to the area of interest. Stated another way, once the digital elevation data is overlaid on the area of interest, so that physical locations on the digital elevation data are matched with physical locations on the area of interest, then an equation for the 2D plane can be found. Moreover, since the satellite image can be treated as an orthographic projection of the area of interest taken by the satellite camera and given the geo-location of the area of interest, the position and attitude of the satellite camera can be determined. Using the 2D-plane equation, the satellite position and attitude and the position, attitude and angles Θ and Φ of the image capturing device, a mapping from the satellite image to the airborne image can be computed. The resulting map is taken as the image warping matrix (see block 110).

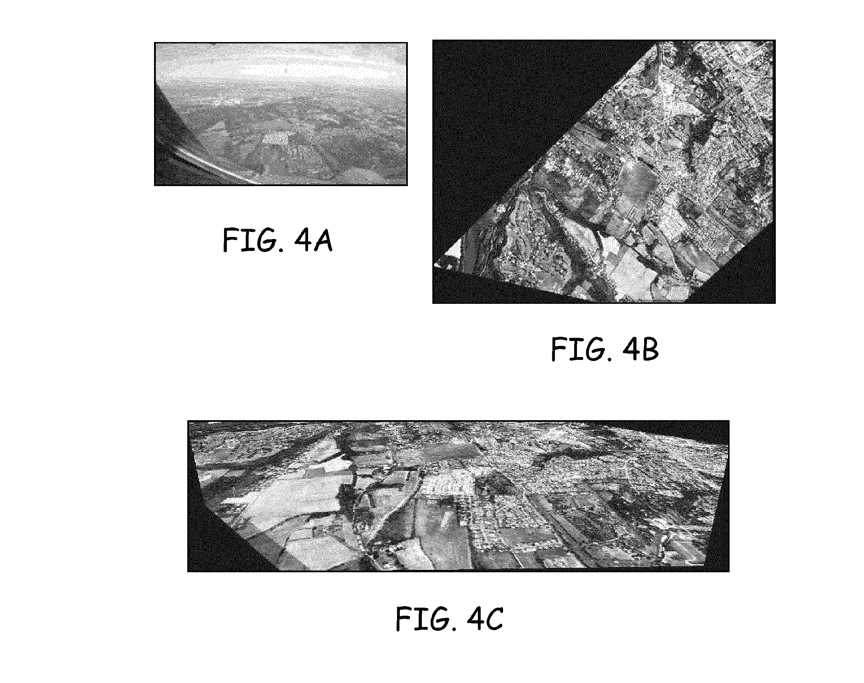

With respect to block 110, the image warping matrix that was created above (see block 108) is used to warp the geo-reference orthoimage to the perspective of the oblique optical image. Stated another way, the geo-referenced orthoimage image is distorted to account for the different angle that the image was taken at in comparison to the oblique optical image. Figures 4A-4C are images showing the result of warping a geo-referenced orthoimage to the perspective of an oblique optical image. Figure 4A is an example of an oblique optical image. This oblique optical image, along with the digital elevation data, is used to create the image warping matrix (see block 108 above). Figure 4B shows the geo-referenced orthoimage before the image is warped to the perspective of the oblique optical image. As mentioned above (see block 106), the geo-referenced orthoimage includes the area of interest that is depicted in the oblique optical image in Figure 4A. Figure 4C shows the geo-referenced orthoimage after the image warping matrix is applied to the geo-referenced orthoimage in Figure 4B. As can be seen, the perspective of the warped geo-referenced orthoimage is the same as the oblique optical image in Figure 4A. Moreover, the features within the warped geo-referenced orthoimage can be more easily matched to the features in the oblique optical image, as discussed below.

With respect to block 112, features in the oblique optical image are matched with features in the warped geo-referenced orthoimage. More specifically, features are first extracted from the oblique optical image and the warped geo-referenced orthoimage using one or more feature extraction algorithms known to one having skill in the art. For example, features can be extracted from the oblique optical image using one or more of a scale-invariant feature transform (SIFT) extraction algorithm, a speed-up robust feature (SURF) extraction algorithm, a Kanade Lucas Tomasi (KLT) extraction algorithm, and the like. Likewise, features can be extracted from the warped geo-referenced orthoimage using similar methods. Alternatively, however, the warped geo-referenced orthoimage may include a database of features from which the features associated with a particular region in the orthoimage can be selected. After the features are extracted from both images, the features from both images can be correlated.

In some embodiments, after the features are extracted, the features in the warped geo-referenced orthoimage and the oblique optical image are correlated using a two-step process. In the first step, the feature descriptions of the images provided by the feature extraction algorithms implemented above are used to correlate a set of associated features in two dimensions. After a set of associated features is found in two dimensions, the second step compares the set of associated features against one another in three dimensions to determine which features in the set of associated features correspond with one another, where three-dimensional data is acquired through a LADAR, RADAR, stereo imagery, and the like. In some embodiments, three-dimensional histograms for the area surrounding the identified features are compared. For example, histograms are created based on the elevation of the area surrounding the identified features and the set of associated features that provide the most similar three-dimensional histograms are determined to be corresponding features. This technique allows further pruning of potential feature matches, allowing features which have the same 2-D (image contrast) descriptor but different 3-D (elevation) descriptors to be discarded. Without the additional 3-D comparison, an incorrect match could possibly be identified. More information describing embodiments of this type of feature matching are described in patent application 13/692,436 entitled SYSTEMS AND METHODS FOR FEATURE SELECTION AND MATCHING, which was filed on December 3, 2012. The patent application having patent application number 13/692,436 is hereby incorporated herein in its entirety by reference. Moreover, after matching features in the oblique optical image and the warped geo-referenced orthoimage, method 100 can include removing matching errors using an algorithm known to one having skill in the art. For example, matching errors can be removed using random sample consensus (RANSAC) or an iteration thereof.

Once the features are matched, the method 100 can include estimating a second position and attitude of the image capturing device 202. (The second position and attitude will also be referred to herein as the final position and attitude and the output position and attitude.) A second position and attitude can be estimated using the matched features and the image capturing device's position relative to those matched features. In an example, the second position and attitude is a refinement of the first position and attitude. That is, the first position and attitude is input into an algorithm along with the determined position and attitude of the image capturing device 202 in order to determine the second position and attitude. The algorithm can take into account that the first position and attitude is the determined position and attitude for the image capturing device 202 at an immediately previous time. Such algorithms are known to those skilled in the art. Similar to estimating the first position and attitude, in some embodiments, to improve the second estimated position and attitude, LADAR, RADAR, stereo imagery, and the like can be used to determine the distance from the image capturing device 202 to the matched features. The estimated second position and attitude of the image capturing device can also be used in conjunction with a global navigation satellite system (GNSS) receiver, an inertial measurement unit (IMU), a gyroscope, an altimeter, or a compass. The inputs from these other devices, along with the estimated second position and attitude, can be used with a Kalman filter in order to continually update the position and attitude of the navigation solution. Moreover, if the image capturing device is attached a vehicle, such as an aircraft 206, once the second position and attitude of the image capturing device 202 is estimated, the position and attitude of the aircraft 206 can be calculated using the image capturing device's 202 position and attitude relative to the vehicle, i.e., using the angles Θ 204 and Φ 203 and the position of the image capturing device 202 relative to the vehicle.

Additionally, in some embodiments, the acts described above with respect to Figure 1 can be implemented in an iterative manner. That is, the acts can be repeated with the same oblique optical image, except in each successive iteration, the second position and attitude (i.e., the output from the previous iteration) is used as the starting point. That is, the second estimated position is substituted for the first estimated position described above. Such an iterative process can refine the estimated position and attitude in each iteration. The number of iterations can be determined in any suitable manner. For example, a fixed number of iterations can be performed for each oblique optical image. In other examples, the number of iterations can be dynamic; that is, the number of iterations can be different for different oblique optical images. Some implementations of a dynamic number of iterations can be based on a difference between the second estimated position and attitude (i.e., the output of the iteration) for different iterations. For example, if the difference between the second position and attitude of a first iteration and the second position and attitude of a second iteration (the iteration following the first iteration) is greater than a defined threshold, another iteration can be performed. If the difference is less than the defined threshold, or less than the defined threshold for a number (e.g., 2) of successive iterations, the iterations can be stopped. In other implementations more complex methods can be used to determine if/when the second position and attitude is converging over successive iterations.

In some embodiments, a new oblique optical image can be used to calculate the position and attitude during a new instance of method 100. That is, a new oblique optical image is captured at a later time period and a position is calculated for this later time period. In some embodiments, in this new instance, the image capturing device 202 may have only changed attitude, but not position. For example, if the image capturing device 202 is located on an aircraft 206, the angle Φ 203 may change to capture a different area of interest, but the aircraft has maintained its same position. As a result, more recognizable features may be captured and correlated using method 100, which may be able to refine the estimated second position and attitude of the image capturing device 202, and thus, the aircraft 206. In other embodiments, the image capturing device 202 may change position as well as attitude between when the first instance of method 100 was completed and the capturing of the area of interest to be used in the next instance of method 100. Under these circumstances, it may be useful to estimate a first position and attitude using the methods discussed above (see block 104), instead of substituting the second position and attitude into the first position and attitude as discussed in the iterative method above. Under some circumstances, however, it may be useful to substitute the second position and attitude into the first estimated position described in the iterative method above. In even some other embodiments, the image capturing device 202 may change position, but not attitude. In some embodiments, whether the second position and attitude is substituted into the first estimated position and attitude can depend on how far the image capturing device 202 has moved since the first instance of method 100 was completed.

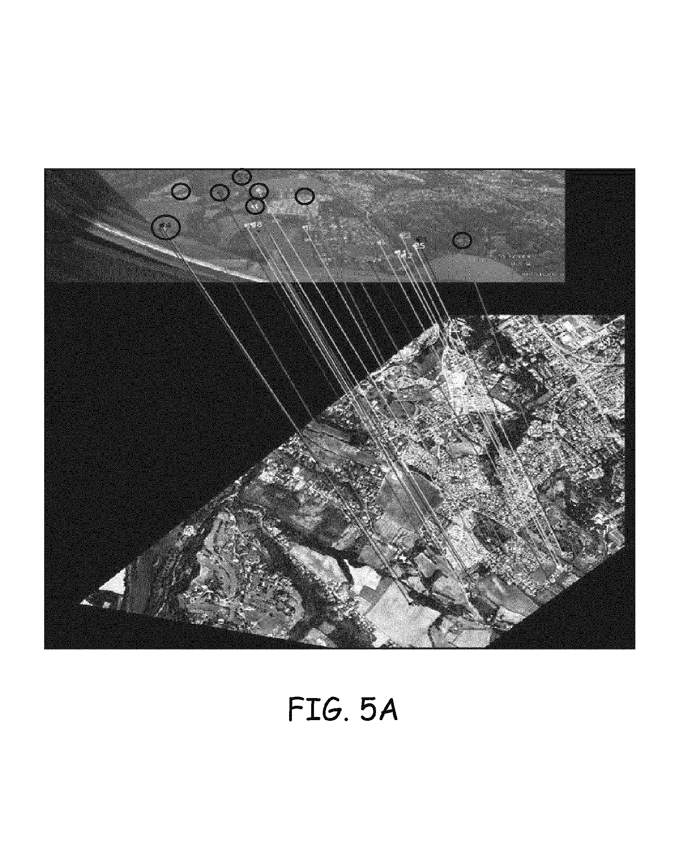

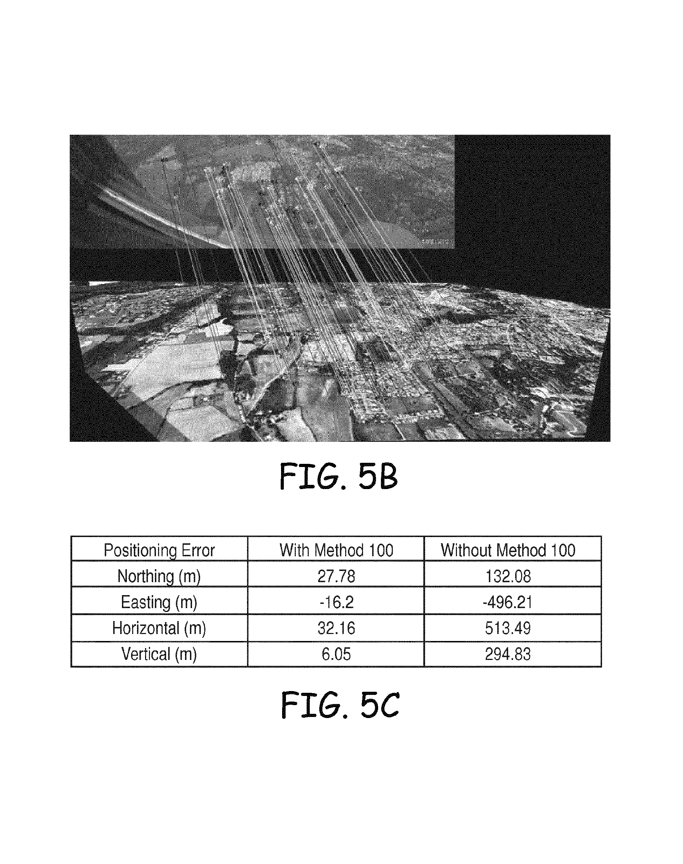

Applying method 100 can yield better results than conventional methods, as can be seen in Figures 5A-5C. Figure 5A displays a conventional method of feature matching. Out of the 25 features that were matched, 10 were incorrectly matched, as indicated by the circles around the incorrectly matched features. In contrast, Figure 5B shows feature matching using method 100, where 84 features were matched and all the matches in Figure 5B were correct. Further, if a navigation solution is calculated using the matched features, Figure 5C shows how much more accurate that navigation solution is. Without method 100, the horizontal error is 513.49 meters, compared to 32.16 meters using method 100. Further, the vertical error is 294.83 meters using convention methods and 6.05 using method 100. As a result, vision-aided positioning is practical for aircraft navigation in GNSS-denied environments using method 100.

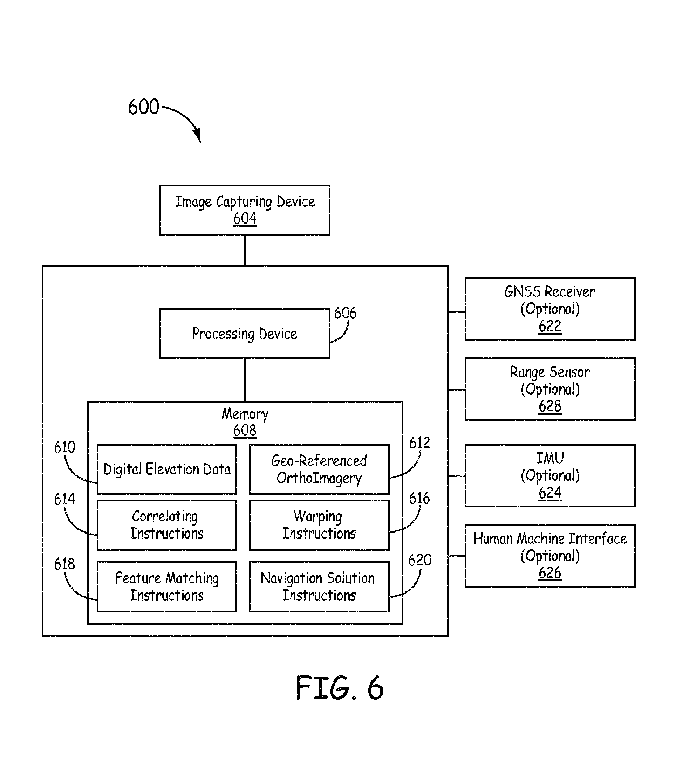

Figure 6 is a system 600 configured to implement the method 100 described above which uses image warping for geo-registration feature matching. The system 600 includes one or more image capturing devices 604 configured to capture at least one optical image, coupled to one or more processing devices 606 which are coupled to one or more memory devices 608, configured to store digital elevation data 610 and geo-referenced orthoimagery 612. In at least one implementation, the one or more processing devices 606 is a programmable device that processes data received from the image capturing device 604 as directed by instructions stored on the memory unit 608. The one or more memory devices 608 include instructions 610-620 which, when executed by the one or more processing devices 606, cause the one or more processing devices to: capture an oblique optical image of an area of interest using the capturing devices, retrieve digital elevation data 610 of an area that includes the area of interest and at least one geo-referenced orthoimage 612 of an area that includes the area of interest, correlate 614 the area of interest in the oblique optical image with the digital elevation data to create an image warping matrix, warp 616 the at least one geo-referenced orthoimage to the perspective of the oblique optical image using the image warping matrix, and match features 618 in the at least one oblique optical image with features in the warped geo-referenced orthoimage. As stated below, these instructions can have some or all of the same functions as the methods described above.

In certain embodiments, the one or more processing devices 606 can include a central processing unit (CPU), microcontroller, microprocessor (e.g., a digital signal processor (DSP)), field programmable gate array (FPGA), application specific integrated circuit (ASIC), or other processing device. In certain embodiments, the memory unit 608 is an electronic hardware device for storing machine readable data and instructions. In one embodiment, the one or more memory devices 608 stores information on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

The image capturing device 604 can include some or all of the image capturing devices that were discussed with respect to method 100 above. Moreover, the digital elevation data 610 and geo-referenced orthoimagery 612 can include some or all of the geo-referenced orthoimagery and digital elevation data discussed in method 100 above. Finally, the correlating instructions 614, warping instructions 616, feature matching instructions 618 and navigation solution instructions 620 can have some or all of the same functions as the correlating methods, warping methods, feature matching methods and estimating position and attitude methods discussed in method 100 above.

In certain implementations, the system 600 includes sensors other than the image capturing device 604. For example, the system 600 may include a range sensor 628. If the system 600 includes a range sensor 628, the range sensor 628 can aid the image capturing device 604 in providing three-dimensional image data that describes the environment of the navigation system 600. In at least one implementation, the range sensor 628 includes an electronic distance meters, such as a LiDAR, a radar, and the like. In a further alternative embodiment, the system 600 may include other sensors that provide navigational data to the processing device 606. For example, the processing unit 606 may receive inertial measurement data from an inertial measurement unit 624. As one having skill in the art would recognize, the inertial measurement unit 624 provides inertial measurements associated with acceleration and rotation as measured by multiple accelerometers and gyroscopes. Further, the processing unit 606 may receive measurements from a global navigation satellite system (GNSS) receiver 622. The processing unit 606 can use the additional navigation information from the additional sensors to calculate a navigation solution for the system 600. In certain implementations, if a navigation solution is calculated, the processor 606 can provide the navigation solution to a human machine interface 626, where the human machine interface 626 can provide information derived from the calculated navigation solution to a user. In at least one implementation, the human machine interface 626 includes a display for displaying the information, a speaker for providing audio information, and/or an input device such as a keyboard, pointer, touch screen, etc. that allow the user to input information.

### EXAMPLE EMBODIMENTS

Example 1 includes a method comprising: capturing an oblique optical image of an area of interest using an image capturing device; providing digital elevation data of an area that includes the area of interest and at least one geo-referenced orthoimage of an area that includes the area of interest; correlating the area of interest in the oblique optical image with the digital elevation data to create an image warping matrix; warping the at least one geo-referenced orthoimage to the perspective of the oblique optical image using the image warping matrix; and matching features in the oblique optical image with features in the at least one warped geo-referenced orthoimage.

Example 2 includes the method of Example 1, further comprising estimating a first position and attitude of the image capturing device at the time the oblique optical image was captured.

Example 3 includes the method of Example 2, further comprising using the matched features to estimate a second estimated position and attitude of the image capturing device at the time the oblique optical image was captured.

Example 4 includes the method of Example 3, further comprising determining a difference between the first estimated position and attitude and the second estimated position and attitude, wherein if the difference between the first estimated position and attitude and the second estimated position and attitude is above a threshold, then iteratively performing the following steps until the difference between the first estimated position and attitude and the second estimated position and attitude is below the threshold: substituting the second estimated position and attitude into the first position and attitude; capturing an oblique optical image of an area of interest using an image capturing device; providing digital elevation data of an area that includes the area of interest and at least one geo-referenced orthoimage of an area that includes the area of interest; correlating the area of interest in the oblique optical image with the digital elevation data to create an image warping matrix; warping the at least one geo-referenced orthoimage to the perspective of the oblique optical image using the image warping matrix; matching features in the at least one oblique optical image with features in the warped geo-referenced orthoimage; using the matched features to calculate a second estimated position and attitude of the image capturing device at the time the oblique optical image was captured; and determining the difference between the first estimated position and attitude and the second estimated position and attitude.

Example 5 includes the method of any of Examples 1-4, wherein the image capturing device is attached to an aircraft.

Example 6 includes the method of any of Examples 1-5, wherein only a portion of the oblique optical image is used in correlating the oblique optical image with the digital elevation data.

Example 7 includes the method of any of Examples 1-6, wherein the features are matched using the scale-invariant feature transform.

Example 8 includes the method of any of Examples 1-7, further comprising removing matching feature errors.

Example 9 includes a system comprising: at least one sensor image capturing device configured to capture at least one optical image; one or more processing devices; one or more memory devices configured to store digital elevation data and geo-referenced orthoimagery, wherein the one or more memory devices are coupled to the one or more processing devices and including instructions which, when executed by the one or more processing devices, cause the one or more processing devices to: capture an oblique optical image of an area of interest using the image capturing device; retrieve digital elevation data of an area that includes the area of interest and at least one geo-referenced orthoimage of an area that includes the area of interest; correlate the area of interest in the oblique optical image with the digital elevation data to create an image warping matrix; warp the at least one geo-referenced orthoimage to the perspective of the oblique optical image using the image warping matrix; and match features in the at least one oblique optical image with features in the warped geo-referenced orthoimage.

Example 10 includes the system of Example 9, wherein the one or more processing devices are further configured to estimate a first position and attitude of the image capturing device at the time the oblique optical image was captured.

Example 11 includes the system of Example 10, wherein the one or more processing devices are further configured to use the matched features to estimate a second estimated position and attitude of the image capturing device at the time the oblique optical image was captured.

Example 12 includes the system of Example 11, wherein the one or more processing devices are further configured to determine a difference between the first estimated position and attitude and the second estimated position and attitude, wherein if the difference between the first estimated position and attitude and the second estimated position and attitude is above a threshold, then iteratively performing the following steps until the difference between the first estimated position and attitude and the second estimated position and attitude is below the threshold: substitute the second estimated position and attitude into the first position and attitude; capture an oblique optical image of an area of interest using an image capturing device; provide digital elevation data of an area that includes the area of interest and at least one geo-referenced orthoimage of an area that includes the area of interest; correlate the area of interest in the oblique optical image with the digital elevation data to create an image warping matrix; warp the at least one geo-referenced orthoimage to the perspective of the oblique optical image using the image warping matrix; match features in the at least one oblique optical image with features in the warped geo-referenced orthoimage; use the matched features to calculate a second estimated position and attitude of the image capturing device at the time the oblique optical image was captured; and determine the difference between the first estimated position and attitude and the second estimated position and attitude.

Example 13 includes the system of any of Examples 9-12, wherein the system is attached to an aircraft.

Example 14 includes the system of any of Examples 9-13, wherein only a portion of the oblique optical image is used in correlating the oblique optical image with the digital elevation data.

Example 15 includes the system of any of Examples 9-14, wherein the features are matched using the scale-invariant feature transform.

Example 16 includes the system of any of Examples 9-15, wherein the one or more processing devices are further configured to remove the matching feature errors.

Example 17 includes a program product comprising a computer readable medium on which program instructions are embodied, wherein the program instructions are configured, when executed by at least one programmable processor, to cause the at least one programmable processor: to capture an oblique optical image of an area of interest using a image capturing device, to estimate a first position and attitude of the image capturing device at the time the oblique optical image was captured; to provide digital elevation data of an area that includes the area of interest and at least one geo-referenced orthoimage of an area that includes the area of interest; to correlate the area of interest in the oblique optical image with the digital elevation data to create an image warping matrix; to warp the at least one geo-referenced orthoimage to the perspective of the oblique optical image using the image warping matrix; to match features in the at least one oblique optical image with features in the warped geo-referenced orthoimage; and to use the matched features to estimate a second estimated position and attitude of the image capturing device at the time the oblique optical image was captured.

Example 18 includes the computer program product of Example 17, wherein only a portion of the oblique optical image is used to correlate the oblique optical image with the digital elevation data.

Example 19 includes the computer program product of any of Examples 17-18, wherein the processing device is further configured to determine whether the difference between the first estimated position and attitude and the second estimated position and attitude is above a threshold.

Example 20 includes the computer program product of any of Examples 18-19, wherein if the difference between the first estimated position and attitude and the second estimated position and attitude is above a threshold, then the program instructions are further configured to substitute the second estimated position and attitude into the first estimated position and attitude and repeat the program instructions: to capture an oblique optical image of an area of interest using a image capturing device, to provide digital elevation data of an area that includes the area of interest and at least one geo-referenced orthoimage of an area that includes the area of interest; to correlate the oblique optical image with the digital elevation data to create an image warping matrix; to warp the at least one geo-referenced orthoimage to the perspective of the oblique optical image using the image warping matrix; to match features in the at least one oblique optical image with features in the warped geo-referenced orthoimage; and to use the matched features to estimate a second position and attitude of the image capturing device at the time the oblique optical image was captured.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method comprising:
capturing an oblique optical image of an area of interest using an image capturing device (102);
providing digital elevation data of an area that includes the area of interest and at least one geo-referenced orthoimage of an area that includes the area of interest (106);
correlating the area of interest in the oblique optical image with the digital elevation data to create an image warping matrix (108);
warping the at least one geo-referenced orthoimage to the perspective of the oblique optical image using the image warping matrix (110); and
matching features in the oblique optical image with features in the at least one warped geo-referenced orthoimage (112).

2. The method of claim 1, further comprising estimating a first position and attitude of the image capturing device at the time the oblique optical image was captured (104).

3. The method of claim 2, further comprising using the matched features to estimate a second estimated position and attitude of the image capturing device at the time the oblique optical image was captured.

4. The method of claim 3, further comprising determining a difference between the first estimated position and attitude and the second estimated position and attitude, wherein if the difference between the first estimated position and attitude and the second estimated position and attitude is above a threshold, then iteratively performing the following steps until the difference between the first estimated position and attitude and the second estimated position and attitude is below the threshold:
substituting the second estimated position and attitude into the first position and attitude;
capturing an oblique optical image of an area of interest using an image capturing device;
providing digital elevation data of an area that includes the area of interest and at least one geo-referenced orthoimage of an area that includes the area of interest;
correlating the area of interest in the oblique optical image with the digital elevation data to create an image warping matrix;
warping the at least one geo-referenced orthoimage to the perspective of the oblique optical image using the image warping matrix;
matching features in the at least one oblique optical image with features in the warped geo-referenced orthoimage;
using the matched features to calculate a second estimated position and attitude of the image capturing device at the time the oblique optical image was captured; and
determining the difference between the first estimated position and attitude and the second estimated position and attitude.

5. A system comprising:
at least one sensor image capturing device (604) configured to capture at least one optical image;
one or more processing devices (606);
one or more memory devices (608) configured to store digital elevation data and geo-referenced orthoimagery, wherein the one or more memory devices (608) are coupled to the one or more processing devices (606) and including instructions which, when executed by the one or more processing devices (606), cause the one or more processing devices (606) to:
capture an oblique optical image of an area of interest using the image capturing device;
retrieve digital elevation data (610) of an area that includes the area of interest and at least one geo-referenced orthoimage (612) of an area that includes the area of interest;
correlate the area of interest in the oblique optical image with the digital elevation data to create an image warping matrix (614);
warp the at least one geo-referenced orthoimage to the perspective of the oblique optical image using the image warping matrix (616); and
match features in the at least one oblique optical image with features in the warped geo-referenced orthoimage (618).

6. The system of claim 5, wherein the one or more processing devices (606) are further configured to estimate a first position and attitude of the image capturing device at the time the oblique optical image was captured (620).

7. The system of claim 6, wherein the one or more processing devices (606) are further configured to use the matched features to estimate a second estimated position and attitude of the image capturing device at the time the oblique optical image was captured (620).

8. The system of claim 7, wherein the one or more processing devices (606) are further configured to determine a difference between the first estimated position and attitude and the second estimated position and attitude, wherein if the difference between the first estimated position and attitude and the second estimated position and attitude is above a threshold, then iteratively performing the following steps until the difference between the first estimated position and attitude and the second estimated position and attitude is below the threshold:
substitute the second estimated position and attitude into the first position and attitude;
capture an oblique optical image of an area of interest using an image capturing device;
provide digital elevation data (610) of an area that includes the area of interest and at least one geo-referenced orthoimage (612) of an area that includes the area of interest;
correlate the area of interest in the oblique optical image with the digital elevation data to create an image warping matrix (614);
warp the at least one geo-referenced orthoimage to the perspective of the oblique optical image using the image warping matrix (616);
match features in the at least one oblique optical image with features in the warped geo-referenced orthoimage (618);
use the matched features to calculate a second estimated position and attitude of the image capturing device at the time the oblique optical image was captured (620); and
determine the difference between the first estimated position and attitude and the second estimated position and attitude.

9. The system of claim 5, wherein only a portion of the oblique optical image is used in correlating the oblique optical image with the digital elevation data.

10. The system of claim 5, wherein the one or more processing devices (606) are further configured to remove the matching feature errors.
